Europäisches Patentamt

European Patent Office

Office européen des brevets

(11) Publication number: **0 405 709 A1**

## EUROPEAN PATENT APPLICATION

(21) Application number: **90303698.6**

(22) Date of filing: **06.04.90**

(51) Int. Cl.5: **G11B 15/16**

(30) Priority: **27.06.89 GB 8914743**

(43) Date of publication of application:
**02.01.91 Bulletin 91/01**

(84) Designated Contracting States:
**DE FR GB**

(71) Applicant: **Hewlett-Packard Limited**
**Nine Mile Ride**
**Wokingham, Berkshire RG11 3LL(GB)**

(72) Inventor: **Jones, Kevin**
**26 Foxfield Avenue**
**Bradley Stoke, Bristol, BS12 0BW(GB)**

(74) Representative: **Smith, Denise Mary et al**
**Hewlett-Packard Limited Nine Mile Ride**
**Wokingham Berkshire RG11 3LL(GB)**

(54) **Method and apparatus for detecting tape position.**

(57) Apparatus and method for detecting the position of tape in tape drive equipment (10) comprising means (22,24) for measuring the angular velocities of the supply reel (12) and take-up reel (14). Initially the angular velocity of one of the reels eg, the take-up reel (14) is measured and stored and subsequently the angular velocity of the other reel is monitored until it reaches a predetermined relationship with the stored value.

START TAPE

DETECT
BOT
SIGNAL

SAMPLE
SIGNALS FROM
DETECTOR 24

CALCULATE +
STORE
$W_{T(INITIAL)}$

SAMPLE SIGNALS
FROM
DETECTOR 22

CALCULATE
$W_S$

CALCULATE
$W_S/W_{T(INITIAL)}$

COMPARE
$W_S/W_{T(INITIAL)}$
WITH K

$W_S/W_{T(INITIAL)} < K$

$W_S/W_{T(INITIAL)} \geq K$

EOT
SIGNAL

DISPLAY

FIG 2

## METHOD AND APPARATUS FOR DETECTING TAPE POSITION

The present invention relates to a method and apparatus for detecting tape position in tape drive equipment. The invention relates particularly, but not exclusively, to method and apparatus for detecting an approaching end-of-tape condition.

In tape drive apparatus a beginning of media condition is said to exist if all the media is wound onto the supply reel, ie. the take-up reel contains no media. An end of media condition is said to exist if all the media is wound onto the take-up reel, ie. the supply reel contains no media.

A data handling device records information onto a tape by sending that information to a tape storage device. The tape storage device establishes a queue of information to be written to the media. This queue is known as a writebehind queue. This means that the information can be said to reside in one of three places:
the data handling device
the writebehind queue
the media.

It is possible for an end of media condition to arise whilst recording. If this occurs, then it is not possible to write the information held in the writebehind queue. This is a highly undesirable situation.

Tape storage devices overcome this situation by predicting when an end of media condition is due to arise. Prediction of an end of media condition allows a data storage device to empty its writebehind queue prior to encountering end of media. The point at which such a prediction is made is known as the early warning end of media point.

One problem addressed by the present invention is how to predict when an end of media condition is imminent.

Several previous proposals address the problem of providing an absolute indication of remaining tape playing time eg. US Patents Nos. 4280159, 4644436. Generally, these proposals require present values for tape parameters to be provided and involve calculations of remaining tape playing time according to various formulae.

There are also previous proposals which address the problem of predicting when the end of tape is imminent. One example is US Patent No. 3834648 which discloses a system in which the user inputs the desired terminal tape reel diameter ie. selects the desired tape condition for which an EOT signal is to be generated. A corresponding pre-stored value for the ratio of the speed of rotation of the reel and the tape velocity is then periodically compared with measured values of this ratio and an EOT signal is generated when these match. Another example is shown in US Patent No. 4561608 in which each of the supply and take-up reels in a tape drive has associated circuitry for measuring and storing a minimum reel diameter value and for subsequently measuring the reel diameter and comparing it with the stored value. When the reel diameter becomes close to the stored minimum value, tape transport is halted.

Apparatus according to the invention enables detection of an impending end of tape (EOT) condition in a simple and effective manner. The apparatus of the invention has the advantage that it does not require prior knowledge of the hub diameters of the supply and take up reels or any other preset values.

Preferably, the apparatus comprises means for measuring a dynamic characteristic of the take up reel at or near the beginning of tape transport and means for subsequently monitoring a dynamic characteristic of the supply reel during tape transport. The dynamic characteristic being measured may be the angular velocity of a reel. Since the take up reel will initially be rotating much faster than the supply reel its angular velocity can be measured to greater accuracy. This feature has the advantage that the initial measurement can be performed during the normal loading routine.

The apparatus may comprise means for detecting when the second value reaches a predetermined percentage of the first value. This feature enables when a particular percentage of tape remains to be detected.

The apparatus may comprise means for detecting when the second value reaches the first value. This feature enables when a predetermined length of tape remains to be detected.

In the embodiment to be described, apparatus and methods for detecting an approaching end-of-tape (EOT) condition are disclosed in which an EOT signal is produced when impending EOT is detected.

A method of detecting the position of tape in tape drive equipment, which equipment comprises a supply reel, a take up reel and means for moving tape between the supply reel and the take up reel comprising:
measuring the value of a dynamic characteristic of one of the reels at a chosen stage in the transport of tape between the reels;
storing a first value dependent on the result of the measuring step;
monitoring a dynamic characteristic of the other reel during tape transport and producing a second value dependent on the result of that measurement;
detecting when the second value reaches a pre-determined relationship with the first value.

The method may comprising measuring a dynamic characteristic of the take up reel at or near the beginning of tape transport and subsequently monitoring a dynamic characteristic of the supply reel during tape transport.

The method may comprise detecting when the second value reaches a pre-determined percentage of the first value.

The method may comprise detecting when the second value reaches the first value.

Furthermore, the method may comprise the step of compensating for the tape being run at other than normal speed.

According to yet another aspect of the present invention, we provide apparatus for detecting the position of tape in tape drive equipment, which equipment comprises a supply reel, a take up reel and means for moving tape between the supply reel and the take up reel, comprising means for measuring a dynamic characteristic of the supply reel and a dynamic characteristic of the take up reel at a chosen stage in the transport of tape between the reels, means for calculating and storing a value indicative of the ratio of the measured dynamic characteristics and means for subsequently calculating and monitoring the ratio of dynamic characteristics of the two reels for an indication of a particular tape position.

The apparatus may comprise means for detecting when the monitored ratio is close to the inverse of the stored ratio value.

Furthermore, the apparatus may comprise means for detecting an approaching end-of-tape condition and comprise means for carrying out the initial measurements at the beginning of tape transport.

According to a further aspect of the present invention we provide a method for detecting the position of tape in tape drive equipment, which equipment comprises a supply reel, a take up reel and means for moving tape between the supply reel and the take up reel, comprising:

measuring a dynamic characteristic of the supply reel,

measuring a dynamic characteristic of the take up reel at a chosen stage in the transport of tape between the reels;

calculating and storing a value indicative of the ratio of the measured dynamic characteristics; subsequently calculating and monitoring the ratio of the dynamic characteristics of the two reels for an indication of the tape approaching a particular position.

This method may comprise detecting when the monitored ratio is close to the inverse of the stored ratio value.

This method may be for detecting an approaching end-of-tape condition and comprise carrying out the initial measurements at the beginning of tape transport.

Embodiments of the present invention will now be described by way of example with reference to the accompanying drawings in which:

Figure 1 is a schematic representation of tape drive equipment including apparatus for detecting an approaching end of tape (EOT) condition according to the present invention;

Figures 2 to 4 are flow diagrams of the steps in different methods according to the present invention.

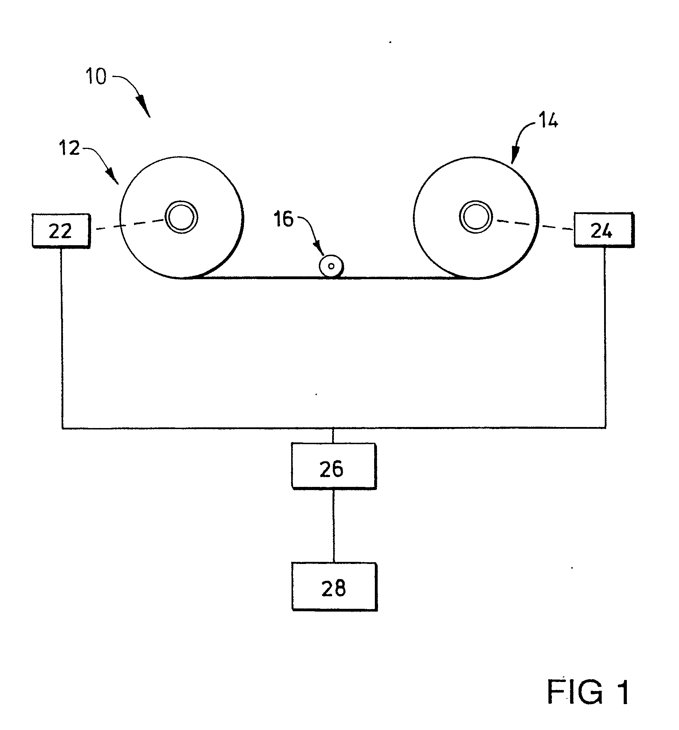

Referring to Figure 1, tape drive equipment is indicated generally at 10 and may be, for example, a back-up tape drive for a computer. The tape drive equipment 10 comprises a supply reel 12, a take up reel 14 and a capstan 16 for transporting tape 20 between the reels 12 and 14 and past a read/write head (not shown).

Predicting end of media according to the invention relies on the change in diameter of the supply and take-up reels 12 and 14 as tape 20 is wound on/off them.

During tape transport, the tape storage device 10 will wind the tape 20 from the supply reel 12 to the take up reel 14 at a constant linear velocity (v) governed by the speed of rotation of the capstan 16 which is in frictional engagement with the tape. The supply and take up reels 12 and 14 rotate at the speeds necessary to unwind/wind the tape 20. The angular velocity (w) of both the supply and take-up reels 12 and 14 will vary with respect to the linear velocity (v) of the tape 20 passing between them. This is due to the variation in the diameter of a reel due to the amount of media it contains. (NOTE: This assumes the media has thickness which is always the case.)

For a constant linear tape velocity (v), a reel will achieve its highest angular velocity (w) when it holds no tape. As tape is wound onto the reel, the diameter of the reel increases and the angular velocity (w) required for the reel to "wind in" the media decreases.

Each of the reels 12 and 14 comprises an optical sensor indicated at 22 and 24 respectively. Each of the optical sensors 22 and 24 comprises a light emitting diode and a photo diode (not shown) for enabling the angular velocity (w) of the reel to be measured. One possible arrangement is to use a disc which rotates with the reel and which has N radial slits. The light emitting diode and photo diode are placed on opposite sides of the disc so that the photo diode receives N pulses of light for each rotation of the reel. This enables the period (T) of rotation of the reel to be measured and hence enables the angular velocity (w) to be calculated since $w = 2$ .

Signals from the optical sensors 22 and 24 are supplied to a digital signal interface 26 for processing before being supplied to a microprocessor 28.

The tape drive equipment 10 also comprises a known form of beginning-of-tape (BOT) detector (not shown), for example an optical arrangement for detecting a transparent portion at the beginning of the tape.

Methods for detecting an approaching end of tape (EOT) condition using apparatus according to the present invention will now be described.

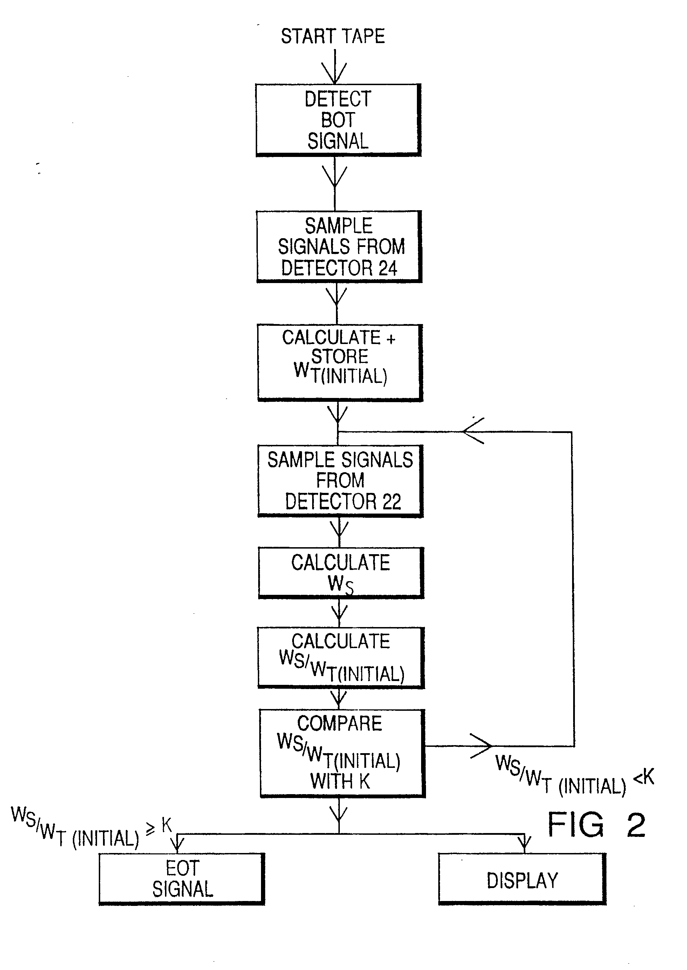

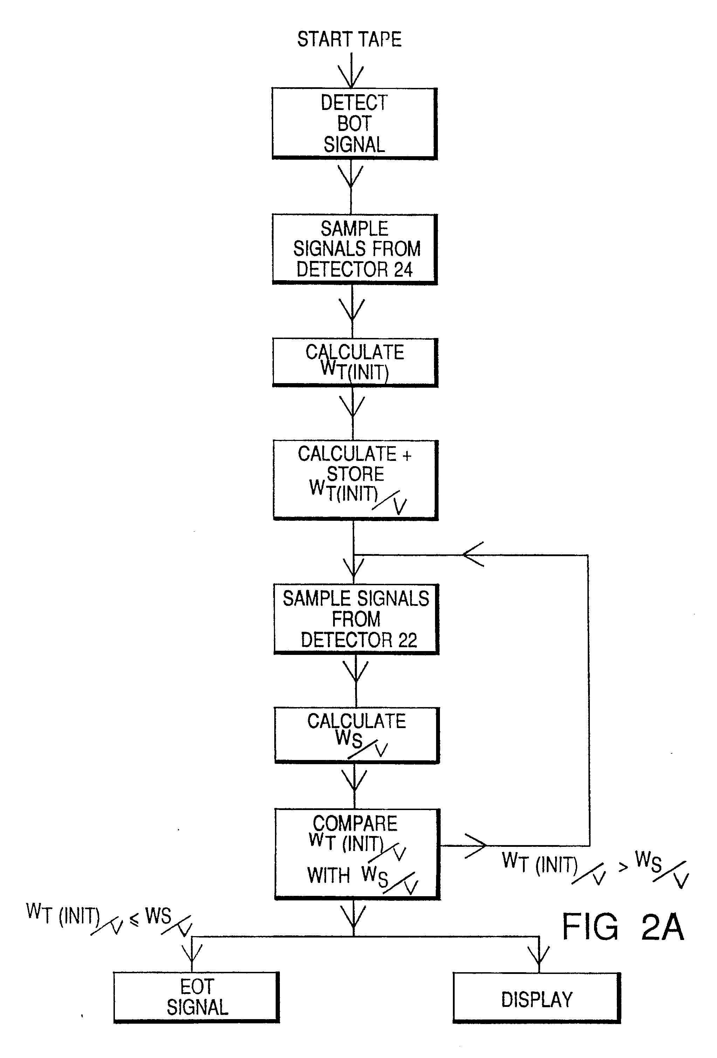

Figure 2 relates to a method for detecting when a chosen percentage of the tape (20) remains on the supply reel 12.

After complete rewinding, at start of tape transport the BOT signal is detected by the microprocessor 28 which triggers pulsed sampling of signals from the optical detector 24. The pulse frequency is used to calculate the initial angular velocity ($w_{T(INIT)}$) of the take up reel 14 and the value of $W_{T(INIT)}$ is stored. Thereafter, during information retrieval/recording, signals from the optical detector 22 are sampled and used to calculate the angular velocity ($w_s$) of the supply reel 12. The ratio $w_s/w_{T(INIT)}$ is calculated and compared with a constant (K) where K <1. K is chosen to be less than but close to 1. This cycle is repeated until the ratio $w_s/w_{T(INIT)}$ > K at which time an impending EOT signal is sent to the data storage device which is providing data to the tape drive equipment 10 so as to enable the writebehind queue to empty before the end of tape transport. An impending EOT signal may also be displayed at that time.

This method causes an EOT signal to be sent when a chosen percentage of tape 20 remains on the supply reel 12 and therefore the actual length of tape 20 left on the supply reel 12 depends on the overall length of the tape 20.

The method has the advantage that the actual diameter of the hubs of the supply and take-up reels 12 and 14 does not need to be known as long as these are equal to within reasonable tolerances.

This method assumes:

1. constant tape velocity (v)

2. that the diameter of the hubs of the supply and take up reels 12 and 14 are equal to with reasonable tolerances.

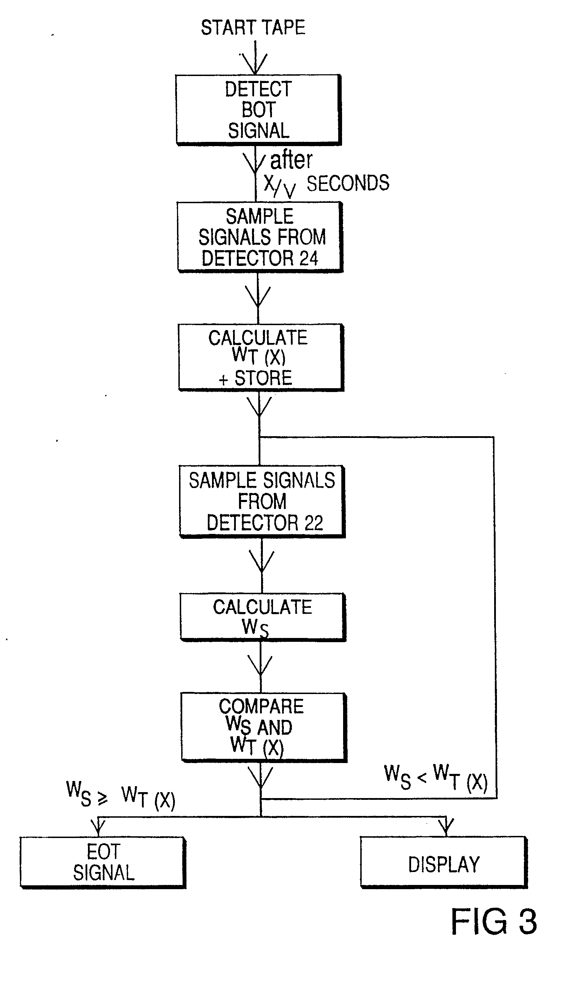

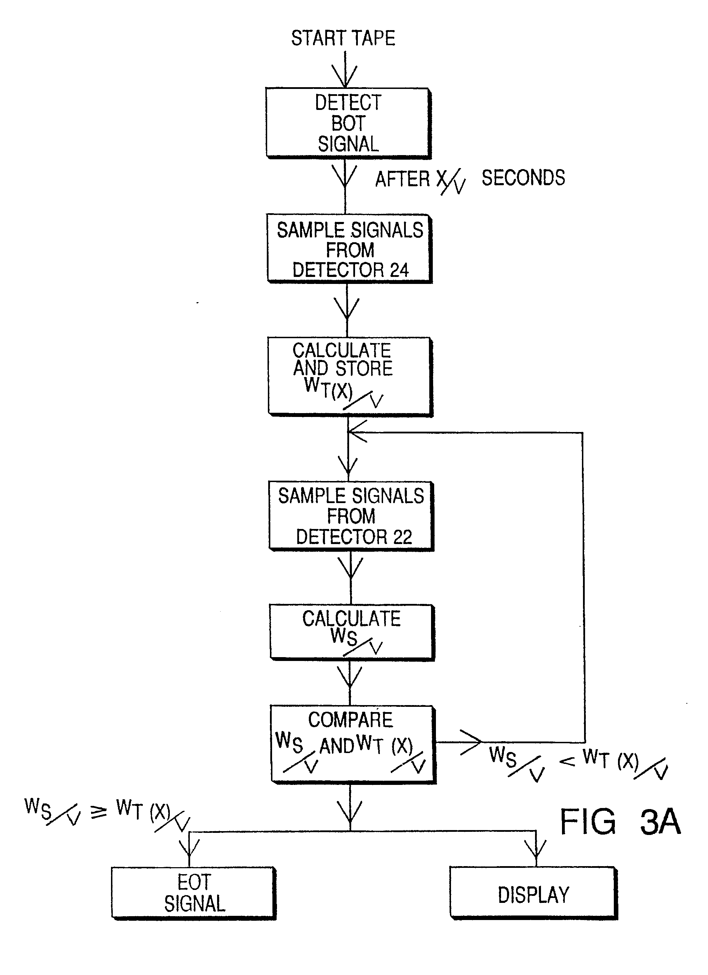

Referring to Figure 3, the second method is for detecting when a chosen length X of tape 20 remains on the supply reel 12, independent of the total length of the tape 20.

After complete rewinding, at start of tape transport, the microprocessor 28 detects the BOT signal and after a set period of time (t) corresponding to a length X of tape 20 being fed from the supply reel 12,

where t = x/v,

processor 28 samples signals from the detector 24.

The microprocessor 28 uses the frequency of these signals to calculate the initial angular velocity ($w_{T(X)}$) of the take up reel 14 and stores that value. Subsequently signals are sampled from the detector 22 and these are used to calculate the angular velocity ($w_s$) of the supply reel 12. The microprocessor 28 repeatedly compares the measured angular velocity ($w_s$) of the supply reel 12 and the initial angular velocity ($w_{T(X)}$) of the take up reel 14.

When: $w_s < w_{T(X)}$ the microprocessor 28 continues to sample signals from the detector 22 as indicated in Figure 3. When $w_s > w_{T(X)}$ the microprocessor 28 causes an EOT signal to be emitted and an indication that the end of tape will soon be reached to be displayed.

This method also assumes:

1. A constant tape velocity

2. That the diameters of the hubs of the supply and take up reels 12 and 14 are equal to within reasonable tolerances. .

In each of the two methods described, above if in fact the diameters of the supply and take-up reels are not the same this factor has to be taken into account.

If the tape is run at a velocity $v^1$ which is not the same as the velocity when the initial measurement of angular velocity was made, this can be compensated for by using the scale factor $v^1/v$

A variation on these methods involves initially measuring the ratio of the angular velocity of the take-up reel ($w_T$) and tape velocity (v) after the BOT signal is detected and storing this value. During tape transport, the ratio of the angular velocity of the supply reel ($w_s$) and tape velocity is monitored and an EOT signal is generated when the monitored ratio reaches the stored ratio (or a predetermined percentage of the stored ratio).

In known manner, tape drive control circuitry causes the capstan to be driven according to the desired tape velocity and the corresponding angular velocity of the capstan is obtained from the control circuitry ie. no special detector is required.

Figures 2A and 3A show the steps in methods using this approach.

In Figure 2A, after calculating the initial angular velocity of the take-up reel ($w_{T(INIT)}$, the value of the ratio of $w_{T(INIT)}/v$ is calculated and stored.

During tape transport, the value of the ratio of the angular velocity of the supply reel and the tape velocity ($w_s/v$) is monitored and compared with $w_{T(INIT)}/v$. As long as $w_s/v < w_{T(INIT)}/v$, the monitoring activity continues. Once, $w_s/v > w_{T(INIT)}/v$, an EOT signal is generated and an EOT indicator may also be displayed.

Alternatively, $w_s/v$ may be compared with a predetermined percentage of the value $w_{T(INIT)}/v$ according to the desired tape position for an EOT signal to be generated.

In Figure 3A, the value of the angular velocity of the take-up reel a distance X into the tape ($w_{T(X)}/v$) is calculated and stored. During tape transport, the value of the ratio of the angular velocity of the supply reel and the tape velocity ($w_s/v$) is monitored and compared with $w_{T(X)}/v$.

As long as $w_s/v < w_{T(X)}/v$, the monitoring activity continues. Once $w_s/v > w_{T(X)}/v$, an EOT signal is generated and an EOT signal may also be displayed.

This approach utilising tape velocity (Figures 2A and 3A) has the advantage that the initial measurement can be taken relatively quickly. In the former case (Figures 2 and 3), the supply reel is initially rotating very slowly and it takes a relatively long time to obtain a sufficient number of pulses to make an accurate measurement.

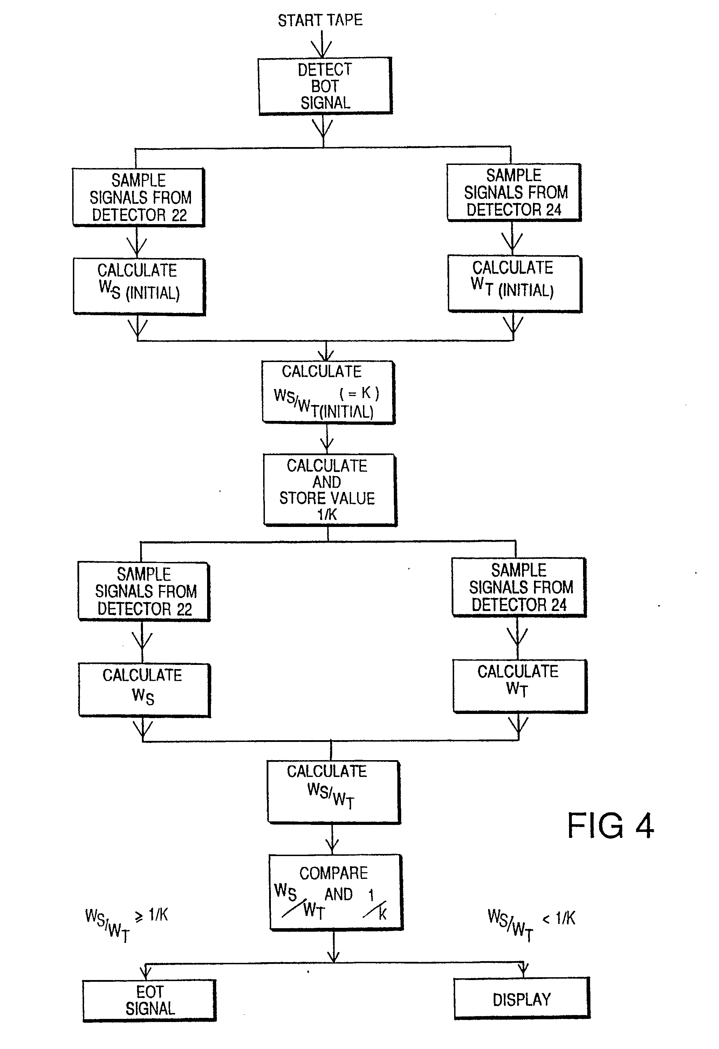

Referring to Figure 4, the third method involves sampling signals from both of the detectors 22 and 24 after the BOT signal is detected and calculating the initial values of the angular velocities of the supply and take-up reels respectively. The microprocessor 28 then calculates the value ( O ) of the ratio of the initial angular velocity of the supply reel 12 to the initial angular velocity of the take-up reel 14 and calculates and stores the inverse value 1/O. During tape transport, signals from the detectors 22 and 24 are sampled and the values $w_S$ and $w_T$ are calculated. Each time, the ratio $w_S/w_T$ is calculated and compared with 1/O.

As long as $w_S/w_T < 1/O$ the sampling procedure continues. When $w_S/w_T > 1/O$ this signals impending end-of-tape and an EOT signal is supplied to the data storage device to enable the writebehind queue to be emptied and a signal indicating impending end of tape is displayed.

This method also assumes a constant tape velocity throughout and assumes that the diameters of the hubs of the supply and take-up reels 12 and 14 are equal within reasonable manufacturing tolerances.

Using the method of Figure 4 enables when the tape reaches a position which is a 'mirror image' along the length of the tape to be detected. For example, taking the initial measurement at BOT enables EOT to be detected; taking the initial measurement a quarter of the way into the tape allows the three-quarters position to be detected.

It will be appreciated that the present invention could be implemented differently from the particular apparatus and methods described above. In particular, other methods for measuring the angular velocity of the supply and take-up reels could be used eg utilising signals from the reel drive motors or using a Hall Effect switch.

Indeed, a different dynamic characteristic of the supply and take-up reels could be measured eg the period of rotation of the reels or the radius of the reels plus tape as all these parameters are interrelated.

It is envisaged that a microprocessor able to operate in more than one mode according to the present invention may be provided and that the mode of operation may be selectable by the user.

The invention is applicable to all forms of tape drive including magnetic tape drives and optical tape drives.

## Claims

1. Apparatus for detecting the position of tape in tape drive equipment (10), which equipment comprises a supply reel (12), a take up reel (14), and means (16) for moving tape between the supply reel and the take up reel, comprising means (22,24) for measuring a dynamic characteristic of one of the reels at a chosen stage in the transport of tape between the reels and means for storing a first value dependent on the result of the measurement, means (22,24) for monitoring a dynamic characteristic of the other reel during tape transport and producing a second value dependent on the result of that measurement characterised by means (28) for detecting when the second value reaches a pre-determined relationship with the first value.

2. Apparatus according to claim 1 comprising means (24) for measuring a dynamic characteristic of the take up reel (14) at or near the beginning of tape transport and means for subsequently monitoring a dynamic characteristic of the supply reel (12).

3. Apparatus according to claim 1 or claim 2 comprising means (28) for calculating the ratio of the measured dynamic characteristic of one of the reels and the tape velocity to provide the first value, and means (28) for calculating the ratio of the monitored dynamic characteristic of the other reel and the tape velocity to provide the second value.

4. Apparatus according to any preceding claim comprising means (28) for detecting when the second value reaches a pre-determined percentage of the first value.

5. Apparatus according to claims 1 to 3 comprising means (28) for detecting when the second value reaches the first value.

6. Apparatus according to any preceding claim comprising means (22,24) for measuring the angular velocities of the supply reel (12) and the take up reel (14).

7. Apparatus according to any preceding claim for detecting an approaching end-of-tape (EOT) condition and for providing an EOT signal.

8. A method of detecting the position of tape in tape drive equipment (10), which equipment comprises a supply reel (12), a take up reel (14) and means (16) for moving tape between the supply reel and the take up reel, comprising:

measuring the value of a dynamic characteristic of one of the reels at a chosen stage in the transport of tape between the reels;

storing a first value dependent on the result of the measuring step;

monitoring a dynamic characteristic of the other reel during tape transport and producing a second value dependent on the result of that measurement; detecting when the second value reaches a pre-determined relationship with the first value.

9. A method according to Claim 8 comprising measuring a dynamic characteristic of the take up reel (14) at or near the beginning of tape transport and subsequently monitoring a dynamic characteristic of the supply reel (12) during tape transport.

10. A method according to claim 8 or claim 9 comprising calculating the ratio of the measured dynamic characteristic of one of the reels and the tape velocity to provide the first value, and calculating the ratio of the monitored dynamic characteristic of the other reel and the tape velocity to provide the second value.

11. A method according to any one of Claims 8 to 10 comprising detecting when the second value reaches a pre-determined percentage of the first value.

12. A method according to any one of Claims 8 to 10 comprising detecting when the second value reaches the first value.

13. A method according to any one of Claims 8 to 12 comprising compensating for the tape being run at other than normal speed.

14. A method according to any one of claims 8 to 13 comprising providing an end-of-tape (EOT) signal when the second value reaches a predetermined relationship with the first value.

15. Apparatus for detecting the position of tape in tape drive equipment, which equipment comprises a supply reel (12), a take up reel (14) and means (16) for moving tape between the supply reel and the take up reel, comprising means (22,24) for measuring a dynamic characteristic of the supply reel and a dynamic characteristic of the take up reel at a chosen stage in the transport of tape between the reels, means (28) for calculating and storing a value indicative of the ratio of the measured dynamic characteristics, means (28) for subsequently calculating and monitoring the ratio of dynamic characteristics of the two reels for an indication of the tape approaching a particular position.

16. Apparatus according to Claim 15 comprising means (28) for detecting when the monitored ratio is close to the inverse of the stored ratio value.

17. Apparatus according to claim 15 or claim 16 comprising means for carrying out the initial measurements at the beginning of tape transport and means (28) for detecting an approaching end-of-tape condition.

18. A method for detecting the position of tape in tape drive equipment, which equipment comprises a supply reel (12), a take up reel (14) and means for moving tape between the supply reel and the take up reel, comprising:

measuring a dynamic characteristic of the supply reel (12),

measuring a dynamic characteristic of the take up reel (14) at a chosen stage in the transport of tape between the reels;

calculating and storing a value indicative of the ratio of the measured dynamic characteristics; subsequently calculating and monitoring the ratio of the dynamic characteristics of the two reels for an indication of the tape approaching a particular position.

19. A method according to claim 18 comprising detecting when the monitored ratio is close to the inverse of the stored ratio value.

20. A method according to claim 18 or claim 19 for detecting an approaching end-of-tape condition comprising carrying out the initial measurement at the beginning of tape transport.

FIG 1

START TAPE

↓

DETECT
BOT
SIGNAL

↓

SAMPLE
SIGNALS FROM
DETECTOR 24

↓

CALCULATE +
STORE
$W_{T(INITIAL)}$

↓

SAMPLE SIGNALS
FROM
DETECTOR 22

↓

CALCULATE
$W_S$

↓

CALCULATE
$W_S/W_{T(INITIAL)}$

↓

COMPARE
$W_S/W_{T(INITIAL)}$
WITH K

$W_S/W_{T(INITIAL)} < K$

$W_S/W_{T(INITIAL)} \geq K$

# FIG 2

EOT
SIGNAL

DISPLAY

START TAPE

DETECT
BOT
SIGNAL

SAMPLE
SIGNALS FROM
DETECTOR 24

CALCULATE
$W_{T(INIT)}$

CALCULATE +
STORE
$W_{T(INIT)}$

SAMPLE SIGNALS
FROM
DETECTOR 22

CALCULATE
$W_S$

COMPARE
$W_{T(INIT)}$
WITH $W_S$

$W_{T(INIT)} > W_S$

$W_{T(INIT)} \leq W_S$

FIG 2A

EOT
SIGNAL

DISPLAY

START TAPE

DETECT
BOT
SIGNAL

after $X/_V$ SECONDS

SAMPLE
SIGNALS FROM
DETECTOR 24

CALCULATE
$W_T (X)$
+ STORE

SAMPLE SIGNALS
FROM
DETECTOR 22

CALCULATE
$W_S$

COMPARE
$W_S$ AND
$W_T (X)$

$W_S \geqslant W_T (X)$

$W_S < W_T (X)$

EOT
SIGNAL

DISPLAY

FIG 3

START TAPE

DETECT
BOT
SIGNAL

AFTER X SECONDS

SAMPLE SIGNALS
FROM
DETECTOR 24

CALCULATE
AND STORE
$W_{T(X)}$

SAMPLE SIGNALS
FROM
DETECTOR 22

CALCULATE
$W_S$

COMPARE
$W_S$ AND $W_{T(X)}$

$W_S < W_{T(X)}$

$W_S \geqq W_{T(X)}$

EOT
SIGNAL

DISPLAY

FIG 3A

START TAPE

DETECT
BOT
SIGNAL

SAMPLE
SIGNALS FROM
DETECTOR 22

CALCULATE
$W_S$ (INITIAL)

SAMPLE
SIGNALS FROM
DETECTOR 24

CALCULATE
$W_T$ (INITIAL)

CALCULATE
$W_S/W_{T(INITIAL)}$ ( = K )

CALCULATE
AND
STORE VALUE
1/K

SAMPLE
SIGNALS FROM
DETECTOR 22

CALCULATE
$W_S$

SAMPLE
SIGNALS FROM
DETECTOR 24

CALCULATE
$W_T$

CALCULATE
$W_S/W_T$

COMPARE
$W_S/W_T$ AND $\frac{1}{K}$

$W_S/W_T \geq 1/K$

$W_S/W_T < 1/K$

EOT
SIGNAL

DISPLAY

FIG 4

## DOCUMENTS CONSIDERED TO BE RELEVANT

EP 90303698.6

| Category | Citation of document with indication, where appropriate, of relevant passages | Relevant to claim | CLASSIFICATION OF THE APPLICATION (Int Cl⁵) |
|---|---|---|---|
| X | <u>US - A - 4 411 008</u> (D'ALAYER DE COSTEMORE D'ARC)<br>   * Abstract; fig. 1,2; column 1, line 66 - column 2, line 11; column 3, lines 48-63; column 4, lines 32-45 * | 1-3,6, 8-10, 15,17, 18 | G 11 B 15/16 |
| X | <u>DE - A1 - 3 412 735</u> (STANDARD)<br>   * Abstract; fig. 2; claims 1,4 * | 1,6,8, 15,18 | |
| X | <u>WO - A1 - 89/02 642</u> (EASTMAN)<br>   * Page 3, line 22 - page 4, line 2; fig. 1,3; claims 1-5 * | 1-3,8, 9,15, 18 | |
| X | <u>US - A - 4 496 117</u> (KASHIWAGI)<br>   * Abstract; fig. 6; column 3, lines 25-53; claims 1-4,6 * | 1,3,5, 6,8, 10,12, 15,18 | |

TECHNICAL FIELDS SEARCHED (Int Cl⁵)

G 11 B 15/00
B 65 H 59/00
G 11 B 27/00

The present search report has been drawn up for all claims

| Place of search | Date of completion of the search | Examiner |
|---|---|---|
| VIENNA | 17-09-1990 | DIMITROW |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document but published on, or after the filing date
D : document cited in the application
L : document cited for other reasons

& : member of the same patent family, corresponding document

EPO Form 1503 03 82